# EUROPEAN PATENT APPLICATION

(11) **EP 4 492 676 A1**
(43) Date of publication of application: **15.01.2025**
(21) Application number: 24181219.7
(22) Date of filing: 10.06.2024
(51) Int. Cl.: H02S 20/23, H02S 20/25, H02S 30/00, F24S 25/613, F24S 25/636, H02S 20/30

(54) **DEVICE FOR MOUNTING AT LEAST ONE SOLAR PANEL TO A ROOF**

(30) Priority: 09.06.2023 NL 2035058; 20.09.2023 NL 2035840
(71) Applicant: Esdec B.V., 7418 EE Deventer (NL)
(72) Inventor: KLOOSTERMAN, Gijs, Willem, 7418 EE Deventer (NL); DE GRAAF, Jan-Floris, 7418 EE Deventer (NL)
(74) Representative: Patentwerk B.V.

(57) **Abstract**

The invention relates to a device for mounting at least one solar panel to a roof. Said device comprising at least one base element and at least one bracket, wherein the base element and the bracket comprise complementary coupling elements for mutual coupling. The distance of the solar panel with respect to the roof is adjustable by the device according to the present invention. The invention further relates to a bracket for use in such a device. The invention further relates to a system comprising multiple devices according to the present invention for mounting multiple solar panels to a roof.

## Description

The invention relates to a device for mounting at least one solar panel to a roof. The invention further relates to a bracket for use in such a device. The invention further relates to a system comprising multiple devices according to the present invention for mounting multiple solar panels to a roof.

The need for sustainable electrical energy is still growing. More and more solar panels are installed on several locations to fulfil this need. It is advantageous to use rooftops as a surface to install solar panels, because it is space efficient. An example of installing solar panels to roofs is by using brackets. Downside of these brackets is that roof tiles need to be adjusted in order to facilitate placement of the bracket. In adjusting the roof tiles they tend to easily break. Furthermore conventional brackets cannot facilitate an optimal positioning of the solar panels on the roof. Some roof connections use a method of clamping tile and batten together, but in this scenario the clamping force applied to the tile may have a negative impact on the maximum load capacity. The maximum load capacity must be limited to that which will not damage or crack the tile. When solar panels are installed on a roof they are subjected to external forces, such as wind. Conventional systems for installing solar panels on a roof are not sufficiently strong to withstand these external forces for the desired lifetime. This can for example be compensated by using more mounting or connecting parts to create a sufficiently strong connection between the solar panel and the roof.

Hence, it is a goal of the invention to provide a stronger system for mounting a solar panel on a roof.

The invention provides thereto a device for mounting at least one solar panel to a roof, comprising at least one base element configured to be attached to part of a roof, and at least one bracket configured for mounting at least part of at least one solar panel system, wherein the base element and the bracket comprise complementary coupling elements for mutual coupling, and wherein at least part of the bracket defines an angled configuration, comprising at least two substantially parallel and/or substantially diverging bracket parts which are connected via at least one distance element, in particular at least one angled distance element. At least one angled distance element is preferably defined by at least one stem and at least one branch, wherein at least one stem is preferably larger than at least one branch.

The device according to the present invention has several benefits over conventional devices. The use of at least one bracket wherein at least part of said bracket defines an angled configuration wherein at least two substantially parallel and/or substantially diverging bracket parts are connected via at least one angled distance element results in that the bracket has a relatively strong configuration wherein collapsing of the bracket and/or a spring effect is prevented. Collapsing of at least part of the bracket and/or the bracket experiencing a spring effect during use can lead to dangerous situations and damaging of the roof and/or solar panel(s). The bracket according to the present invention benefits of being sufficiently strong to withstand the forces of the solar panel(s) attached to the bracket and/or environmental influences for example due to external (weather) conditions. The shape of the bracket thereby also enables that the solar panel(s) can be positioned at a convenient position upon the roof. Because of the strength of the bracket the deflection under load is lower, and therefore a lower risk of touching the tile under downward force. Another advantage of the shape of the bracket is that less adjustment to the tiles is needed for mounting the system onto a roof, which results in less broken tiles during mounting of the system on a roof. The combination of at least one base element and at least one bracket according to the present invention enables that the device and thus the subsequent solar panel(s) can be attached to the roof in an efficient and effective manner.

At least one base element is in particular configured to be attached to part of a roof. It is for example conceivable that at least one base element is configured to be attached to at least part of a roof via at least one mechanical fixing element. At least one base element can for example be configured to be screwed to at least part of a roof, for example a support element such as a purlin and/or rafter.

At least one bracket is in particular configured for mounting at least part of at least one solar panel system. Hence, at least one bracket can be configured to be attached to for example a mounting rail of a solar panel or solar panel system. The base element and the bracket comprise complementary coupling elements for mutual coupling thereof.

As indicated above, the angled configuration of at least part of the bracket result in the functional character of the bracket. The at least two substantially parallel and/or substantially diverging bracket parts which are connected via at least one angled distance element define an asymmetric form seen from a mirror surface defined between the substantially parallel and/or substantially diverging bracket parts. When it is referred to substantially parallel bracket parts this could include slightly diverging bracket parts. The bracket parts are in particular diverging away from the stem and branch. Bracket parts forming parts of the bracket according to the present invention are in particular not converging. It can also be said that at least part of the angled configuration of the bracket defines a deviating C-shape and/or U-shape. It is for example imaginable that at least one distance element comprises two substantially linear distance element parts, for example a stem and a branch. At least one angled distance element is preferably defined by at least one stem and at least one branch, wherein at least one stem is larger than at least one branch. In particular, the length of the at least one stem is larger than the length of the at least one branch. At least one distance element, in particular at least one angled distance element is in particular defined such that at least one stem is positioned under an angle in the range of 80 to 110 degrees with respect to at least one bracket part, in particular at least one bracket part which is configured to be coupled to at least one base element. The relatively long stem compared to the branch results in an increased strength of the bracket. At least one branch is for example a lateral branch. At least one branch can for example extend in a direction away from the stem, for example under an angle in the range of 30 to 60 degrees, preferably substantially 45 degrees, seen from a centre line defined by the stem of the distance element. It is also imaginable that at least one stem and at least one branch define an included angle larger than 100 degrees, preferably larger than 120 degrees, more preferably larger than 130 degrees. The stem is preferably closer to the base element than the branch.

At least one first bracket part is preferably longer than at least one second bracket part. It is for example imaginable that at least one first bracket part is longer than the effective distance of at least one distance element. It is also imaginable that at least one first bracket part is longer than at least one stem of at least one distance element. At least one distance element can for example be configured such that the effective distance thereof is at least 5 cm, preferably at least 7 cm, more preferably at least 10 cm.

The at least one bracket can comprise an upper bracket part and a lower bracket part, which bracket parts are substantially parallel and/or substantially diverging bracket parts which are mutually connected via at least one distance element. The design of the device is preferably such that the length of a projection of the at least one branch upon the lower bracket part of the bracket is in the range of ¼ and ½ of the length of the lower bracket part. The design of the device is preferably such that the length of a projection of the at least one branch extending over the lower bracket part of the bracket is in the range of ¼ and ½ of the length of the lower bracket part. When the length of the projection is too large the stiffness of the bracket will be too low, and when the length of the projection is too small (i.e., 0.0) there will be no strength benefit. It is in a yet another embodiment possible that the length of a projection of the at least one branch upon, or extending over, the lower bracket part of the bracket is in the range of 1/5 to 2/3 of the length of the lower bracket part. The length of the stem is for example at least 1.375 or 1.4 times larger, preferably at least 1.5 times larger than the length of the branch, possibly 2 times or 2.5 times.

Possibly, the smallest distance between the upper bracket part and the lower bracket part is substantially the same or larger than the distance between the at least one stem and the distal end of the upper bracket part, in particular the smallest distance between the at least one stem and the distal end of the upper bracket part preferably measured substantially perpendicular to a length direction of the at lest one stem.

In a preferred embodiment, at least one bracket comprises a lower part, a middle part and an upper part, wherein the lower part is configured to be attached to the base element, wherein the middle part defines an angled configuration, comprising at least two substantially parallel and/or substantially diverging bracket parts which are connected via an angled distance element and wherein the upper part comprises at least one top structure configured for mounting at least part of at least one solar panel system. In a further preferred embodiment, the lower part, middle part and upper part of the bracket are formed of a single piece. A bracket made of a single piece can positively contribute to the strength of the bracket. Hence, it is imaginable that the lower part, middle part and/or upper part of the bracket are integrally connected. It is for example imaginable that at least one bracket is made out of one piece of material. It is also imaginable that at least one base element is made of a single piece. It is for example possible that at least one bracket is defined by an arm. The bracket, or arm, can have two distal ends. A first distal end can be configured to be coupled to a base elements whereas a second distal end can be configured for mounting at least part of a solar panel system. It is also possible that the device according to the present invention comprises a plurality of base elements, for example a plurality of connected base elements.

At least one bracket can for example be an adjustable bracket. At least one bracket can for example be adjustable in height and/or width. Preferably, at least one bracket is configured such that the distance between at least one lower part and at least one upper part, if applied, is adjustable. It is beneficial if the height and/or length of at least one distance element of at least one bracket is adjustable. It is for example conceivable that at least one distance element comprises two pieces which are mutually adjustable. Such embodiment can contribute to possibility to apply the device according to the present invention in different roof configurations. In an alternative preferred embodiment are the at least two substantially parallel bracket parts and the angled distance element made of a single piece. Such embodiment is relatively rigid and can further enhance the strength of the bracket.

At least one bracket part, and preferably each bracket part is substantially elongated. It is for example imaginable that at least one bracket part is substantially elongated and that a distal end of said bracket part comprises at least one coupling element for coupling to at least one base element. It is imaginable that at least one coupling element is facing away from the elongated part defining the bracket part. It is for example imaginable that at least one coupling element is positioned at an angle with respect to at least one substantially elongated bracket part. Said angle can for example be in the range of 20 to 160 degrees for example in the range of 40 to 120 degrees or in the range of 80 to 100 degrees. It is for example imaginable that at least one substantially elongated bracket part is substantially parallel to at least part of the base element, and in particular an elongated part of the base element, in an assembled state.

In yet a further preferred embodiment, the length of a first bracket part is larger than the length of a second bracket part. It is for example imaginable that an upper bracket part is smaller than a lower bracket part. The first bracket part can for example be a lower part of the bracket, connected to at least one coupling element and the second bracket part can be an upper part of the bracket, for example near the top structure, if applied. In a preferred embodiment, the length of at least one bracket part is larger than the length of at least one linear part of at least one distance element. Preferably, the length of at least one first bracket part is larger than the length of the stem of the distance element and/or the length of at least one second bracket part is shorter than the length of the branch of the distance element. It is for example also possible that the length of at least one first bracket part is larger than the absolute length defined by at least one distance element.

Preferably, a first bracket part and the distance element enclose and/or defines an angle in the range of 80 to 110 degrees, preferably in the range of 80-100 degrees, more preferably in the range of 85 to 95 degrees, even more preferably substantially 90 degrees. In a preferred embodiment, the first bracket part and the distance element form an angle of at least 90 degrees. In particular the angle formed by the first bracket part and the distance element (preferably the stem of the distance element) can be in the range of 90-100 degrees, more preferably 91-99 degrees, even more preferably in the range of 92-96 degrees. Preferably the angle formed by the stem of the distance element and the first bracket part is an obtuse angle.

More in particular, a first bracket part and the stem of the distance element enclose an angle in the range of 80 to 100 degrees, preferably in the range of 90 to 100 degrees, more preferably in the range of 95-100 degrees, even more preferably substantially 96 degrees. It is imaginable that least one first bracket part and least one distance element enclose a substantially orthogonal angle.

Possibly, a second bracket part and the distance element, in particular the branch of the distance element, enclose an angle which is larger than 90 degrees, preferably larger than 100 degrees, more preferably larger than 120 degrees. It is for example imaginable that the included angle between the second bracket part and the distance element, and in particular the branch of the distance element is larger than 90 degrees, preferably larger than 100 degrees, more preferably larger than 120 degrees. It is for example possible that an angle enclosed by the second bracket part and the (branch of) the distance element is in the range of 110 to 150 degrees, preferably in the range of 130 to 140 degrees, for example substantially 135 degrees.

In an embodiment, preferably the angle between the second bracket part and the stem is substantially 90 degrees. It is conceivable that the branch divides this angle in parts. Preferably the angle between the second bracket part and the branch is in particular an obtuse angle, preferably 135 degrees.

It is imaginable that at least one distance element is an angled distance element, wherein the angled distance element defines an included angle larger than 100 degrees, preferably larger than 120 degrees, more preferably larger than 130 degrees. It is for example conceivable that the stem and branch of at least one distance element define an included angle larger than 100 degrees, preferably larger than 120 degrees, more preferably larger than 130 degrees. It is also possible that said angle formed by the stem and the branch of the distance element is in the range of 100 to 160 degrees, preferably 120 to 150 degrees, and more preferably substantially 135 degrees.

In a beneficial embodiment, at least one bracket comprises at least one top structure configured for mounting at least part of at least one solar panel system. It is for example imaginable that at least one top structure is configured for mounting at least one rail of a solar panel or solar panel system. At least one top structure is preferably provided at an upper part of the bracket. Typically, at least one top structure is provided at a distal end of at least one bracket. At least one further distal end of at least one bracket can be provided with at least one coupling element for coupling with at least one base element. At least one top structure is preferably adjustably connected to an upper part of the bracket. In a more preferred embodiment, at least one top structure is adjustably connected to part of the bracket, in particular an upper part of the bracket, in a rotatable manner.

Additionally, and/or alternatively, it is also conceivable that the position of the top structure with respect to the bracket is adjustable, preferably in at least two directions. Hence, it is conceivable that the height of the top structure is adjustable. It is for example imaginable that the device according to the present invention, and in particular the bracket, comprises a height adjustment mechanism for connecting the top structure with the bracket and for adjustment of the position of the top structure with respect to the base element. At least one top structure comprises in a preferred embodiment at least two hooked shaped members configured for mounting at least part of at least one solar panel system via a snap connection. It is for example imaginable that at least one top structure comprises a click system for attaching part of a solar panel to the top structure. Optionally, at least one bracket comprises at least one support element. At least one top structure can be connected to the bracket via at least one support element. It is for example imaginable that at least one support element is an L-shaped support element. Such shape enables easy positioning of the support element and/or the top structure with respect to the bracket. It is for example imaginable that at least one support element is adjustably connected or connectable to at least one bracket, in particular an upper part of the bracket.

In a preferred embodiment, at least part of the bracket is made of metal, preferably sheet metal. The bracket can be shaped as a continuous elongated structure, in particular the (structure of the) bracket can be formed by a rolled steel channel. It is for example that the bracket is fully made of metal, preferably steel. Alternatively, at least part of the bracket could be made of aluminium. Or in yet another alternative embodiment, at least part of the bracket can be made of a polymer, for example a (fiber) reinforced polymer. It is for example possible that the bracket is made of a single piece of metal, in particular steel. It is for example possible that at least one bracket is made via sheet metal forming. The shape of the bracket can for example be obtained via (elastic and/or plastic) deformation of the metal material by bending, stretching and/or drawing. The use of a bracket which is at least partially and preferably entirely made of metal can further contribute to the strength and rigidity of the bracket. It is also conceivable that at least part of the bracket is made by extrusion, for example extrusion of aluminium.

Preferably, at least part of the base element is made of a different material than at least part of at least one bracket. It is for example conceivable that at least one bracket is made of a first metal and that at least one base element is made of a second metal, wherein the first metal and the second metal are different. The use of different materials can positively contribute to an efficient cooperation between the base element(s) and the bracket(s). It is for example conceivable that the mutual coupling between the bracket and the base element is improved when each component is made of a different material.

It is for example imaginable that at least part of at least one base element is made of metal, in particular aluminium. It is conceivable that the base element can be made from sheet metal. Hence, it is imaginable that at least one base element comprises aluminium. At least one base element can for example be made by extrusion, preferably by extrusion of aluminium. Alternatively, at least part of the base element can be made of a polymer, for example a (fiber) reinforced polymer, and/or a sheet metal.

At least one base element optionally comprises at least one base plate configured to be attached to part of a roof and at least one coupling element configured for coupling with at least one bracket. It is for example imaginable that at least one base plate is substantially flat and/or that at least one coupling element defines a receiving space for receiving at least part of at least one bracket. It is for example imaginable that at least one coupling element defines a rail or guide rail. At least part of the at least one coupling element can for example comprise at least two opposing side walls which define a receiving space. At least one coupling element is preferably provided with multiple slits and/or (slotted) openings which are configured to receive at least part of a bracket. The coupling element can for example be configured such that at least one bracket can be connected with the coupling element at different positions.

At least one bracket preferably comprises at least one reinforcement rib and/or at least one reinforcing side wall. This could further contribute to the strength and rigid character of the bracket. It is for example imaginable that the bracket comprises at least two reinforcement ribs which extend over at least part of the angled configuration of the bracket. In case the bracket is at least partially made of a metal sheet, at least one reinforcement rib can for example be formed by a folded side edge of the metal sheet. Preferably, at least one bracket comprises at least one threaded hole for receiving at least part of at least one screw for attaching at least one bracket to at least one base element and/or to at least part of the roof. It is for example imaginable that at least one threaded hole is positioned at a lower part of at least one bracket. The device could optionally comprise at least one support screw attached or attachable to the bracket and the base element. At least one support screw can be configured to provide support for the bracket with respect to the base element. It is also imaginable that at least one support screw is positioned such that support is provided for the bracket with respect to the base element. At least one base element could comprise at least one recess for receiving at least part of at least one support screw. The support screw and/or base element could optionally be configured such that the support screw penetrates only part of the base element. Hence, at least one recess can be a depression, and preferably not a through hole. The support screw can be received within a recess. In an embodiment, the recess can be formed in between two raised portions. The support screw could also be a bolt and/or a fastener.

The support screw, if applied, has the advantage that the movement of the base element with respect to the bracket is limited. Sliding of the bracket along the grooves in the base element can be limited and/or locked by the support screw. In particular, the support screw can at least partly lock the bracket with the base element.

It is imaginable that the device according to the present invention is configured such that at least one bracket can be aligned with respect to at least one base element in different positions, preferably in different vertically oriented positions. It is for example imaginable that at least one base element comprises a series of slits for horizontal sliding of at least part of the bracket therein. It is for example imaginable that at least one bracket comprises at least one coupling element comprising at least one protrusion and wherein least one base element comprises at least one complementary coupling element comprising at least one receiving space for receiving at least part of at least one protrusion. In this embodiment, coaction between the bracket and the base element can be facilitated in a relatively easy manner. At least one coupling element of at least one bracket could for example comprise at least two opposing coupling members. This configuration could lead to a relatively stable coupling with at least one base element. It is also possible that at least one coupling element of at least one base element comprises multiple receiving spaces for receiving at least part of at least one complementary coupling element of at least one bracket. The multiple receiving spacing can for example be provided in a parallel manner. In yet another possible embodiment, at least one coupling element of at least one base element comprises a matrix of openings for receiving at least part of at least one bracket, and in particular at least part of at least one coupling element of at least one bracket. This embodiment could lead to a decent and reliable coupling between at least one bracket and at least one base element. Optionally, at least one coupling element of at least one bracket comprises at least two fingers, preferably at least three fingers, which are each configured to be received in opening(s) of the matrix of openings. It is for example imaginable that at least three fingers are provided in a Y shaped configuration. This would result in a relatively stable configuration when the bracket is coupled to the base element. It is for example imaginable that the coupling element comprises fingers extending to one end and with at least one tongue extending to an opposite end. At least one coupling element of at least one bracket could also comprise at least one protrusion and/or at least one tongue. It is also imaginable that at least one protrusion defines at least one finger. At least one finger, protrusion and/or tongue could be relatively easily received in a receiving space, such as an opening and/or slit of at least one base element. It is also imaginable that at least one coupling element of at least one bracket comprises at least two, preferably at least three, coupling members which are positioned at a distance from each other. At least one coupling member could alternatively also be referred to as an aligning member. At least one coupling member of at least one coupling element is preferably shorter than at least one further coupling member of said coupling element. For example, at least one finger can be shorter than at least one further finger. This could positively contribute to the stability of the connection between the bracket and the base element. Optionally, at least one coupling member can be resilient and/or movable in height with respect to at least one further coupling member. The shorter finger is preferably resilient and in an assembled state locks the bracket within the base element. The shorter finger can move upward or downward with respect to the other fingers, preferably such that the shorter finger for example abuts the base element, and thereby at least limiting the movement possibilities of the bracket with respect to the base element. This limiting provides a locking function of the bracket within the base element. The longer fingers, with respect to the shorter finger, preferably can lock within slits or through holes within the base element. This can be done for example by a click connection. However, in a preferred embodiment, at least one coupling member is a rigid (non-flexible) coupling member. Optionally, at least one base element comprises at least one fastening element for fastening the base element to part of a roof, in particular part of a substructure of a roof.

The device according to the present invention can also be configured to allow multilevel height adjustment of the bracket with respect to the base element.

The device according to the present invention may be provided with visual indicators. The visual indicators allow a user to indicate how to install the device in the correct allowable position into the roof. For example, the base element may be provided with at least one visual indicator, preferably two visual indicators. These visual indicators may be applied at the leading edge of the base element. In an embodiment, the visual indicator may be shaped as a cut-out and/or indent. The visual indicator may be, for example a triangular cut-out (as seen from the leading edge), or a polygonal shaped cut-out, such as a rectangular cut-out. The visual indicator can also be a palpable pattern or protruding element that is provided onto the top surface and/or leading edge of the base element of the device according to the present invention. The visual indicator can also be positioned close to the leading edge and have the shape of a through hole through base element. If visual indicators are applied, during installation, the base element can be moved in any position, as long as at least one side edge of the base element and at least one cut-out is positioned above the rafter of the roof. In another embodiment, it is possible that it is sufficient that as long as one visual indicator is positioned above the rafter the device is in an allowable position. The visual indicator decreases the chance that a base element and thus the device is mounted incorrectly on the rafter of the roof. Hence, the visual indicator improves the safety of the device. The visual indicator, if applied, and when comprising an indent or protrusion, has the advantage that the visual indicator cannot fade due to external circumstances. The visual indicator can be palpable by the user's fingertips.

The invention also relates to a bracket for use in a device according to the present invention. The bracket can have any of the described embodiments. The invention also relates to a base element for use in a device according to the present invention.

The invention further relates to a system comprising multiple devices according to the present invention. It is for example imaginable that the system comprises multiple brackets which are connected to a single base element.

The invention will be further elucidated by means the following non-limitative clauses:
1. Device for mounting at least one solar panel to a roof, comprising:
   - at least one base element configured to be attached to part of a roof; and
   - at least one bracket configured for mounting at least part of at least one solar panel system,

   wherein the base element and the bracket comprise complementary coupling elements for mutual coupling; and
   wherein at least part of the bracket defines an angled configuration, comprising at least two substantially parallel and/or substantially diverging bracket parts which are connected via at least one angled distance element, wherein at least one angled distance element is defined by at least one stem and at least one branch wherein at least one stem is larger than at least one branch.
2. Device according to clause 1, wherein at least one bracket comprises a lower part, a middle part and an upper part, wherein the lower part is configured to be attached to the base element, wherein the middle part defines an angled configuration, said middle part comprising at least two substantially parallel and/or substantially diverging bracket parts which are connected via an angled distance element and wherein the upper part comprises at least one top structure configured for mounting at least part of at least one solar panel system.
3. Device according to clause 2, wherein the lower part, middle part and upper part of the bracket are formed of a single piece.
4. Device according to any of the previous clauses, wherein the height of the distance element of the bracket is adjustable.
5. Device according to any of the previous clauses, wherein the at least two substantially parallel and/or diverging bracket parts and the angled distance element are made of a single piece.
6. Device according to any of the previous clauses, wherein at least one bracket part is substantially elongated and wherein a distal end of said bracket part comprises at least one coupling element for coupling to at least one base element.
7. Device according to any of the previous clauses, wherein the length of a first bracket part is larger than the length of a second bracket part.
8. Device according to any of the previous clauses, wherein a first bracket part and the distance element enclose an angle in the range of 80 to 110 degrees, preferably in the range of 90 to 100 degrees, more preferably substantially 95 degrees.
9. Device according to any of the previous clauses, wherein a second bracket part and the distance element enclose an angle larger than 90 degrees, preferably larger than 100 degrees, more preferably larger than 120 degrees.
10. Device according to any of the previous claims, wherein at least one distance element is an angled distance element, wherein the angled distance element defines an included angle larger than 100 degrees, preferably larger than 120 degrees, more preferably larger than 130 degrees.
11. Device according to any of the previous clauses, wherein at least one bracket comprises at least one top structure configured for mounting at least part of at least one solar panel system.
12. Device according to clause 11, wherein at least one top structure is adjustably connected to an upper part of the bracket in particular in a rotatable manner.
13. Device according to clause 11 or 12, wherein at least one top structure comprises at least two hooked shaped members configured for mounting at least part of at least one solar panel system via a snap connection.
14. Device according to any of clauses 11 to 13, wherein the bracket comprises at least one support element, and wherein at least one top structure is connected to the bracket via at least one support element.
15. Device according to any of the previous clauses, wherein at least part of the bracket is made of metal, preferably sheet metal.
16. Device according to any of the previous clauses, wherein at least part of the base element is made of a different material than at least part of at least one bracket.
17. Device according to any of the previous clauses, wherein at least part of at least one base element is made of metal, in particular aluminium.
18. Device according to any of the previous clauses, wherein at least one base element is made by extrusion, preferably by extrusion of aluminium.
19. Device according to any of the previous clauses, wherein at least one base element comprises at least one base plate configured to be attached to part of a roof and at least one coupling element configured for coupling with at least one bracket.
20. Device according to any of the previous clauses, wherein at least one bracket comprises at least one reinforcement rib.
21. Device according to any of the previous claims, wherein at least one bracket comprises at least one threaded hole for receiving at least part of at least one screw for attaching at least one bracket to at least one base element and/or to at least part of the roof.
22. Device according to any of the previous clauses, comprising at least one support screw attached or attachable to the bracket and the base element such that support is provided for the bracket with respect to the base element.
23. Device according to clause 22, wherein at least one base element comprises a recess and/or receiving space for receiving at least part of at least one support screw.
24. Device according to any of the previous clauses, wherein at least one bracket comprises at least one coupling element comprising at least one protrusion and wherein at least one base element comprises at least one complementary coupling element comprising at least one receiving space for receiving at least part of at least one protrusion.
25. Device according to clause 24, wherein at least one coupling element of at least one bracket comprises at least two opposing coupling members.
26. Device according to clause 24 or clause 25, wherein at least one coupling element of at least one base element comprises multiple receiving spaces for receiving at least part of at least one complementary coupling element of at least one bracket.
27. Device according to any of clauses 24 to 26, wherein at least one coupling element of at least one base element comprises a matrix of openings for receiving at least part of at least one bracket.
28. Device according to clause 27, wherein at least one coupling element of at least one bracket comprises at least two fingers, preferably at least three fingers, which are each configured to be received in an opening of the matrix of openings.
29. Device according to any of clauses 24 to 28, wherein at least one coupling element of at least one bracket comprises at least one protrusion and/or at least one tongue.
30. Device according to any of clauses 24 to 29, wherein at least one coupling element of at least one bracket comprises at least two, preferably at least three, coupling members which are positioned at a distance from each other.
31. Device according to any of clauses 25 to 30, wherein at least one coupling member of at least one coupling element is shorter than at least one further coupling member of said coupling element.
32. Device according to any of clauses 25 to 31, wherein at least one coupling member is resilient and/or movable in height with respect to at least one further coupling member.
33. Device according to any of the previous clauses, wherein at least one base element comprises at least one fastening element for fastening the base element to part of a roof, in particular part of a substructure of a roof.
32. Device for mounting at least one solar panel to a roof, comprising:
   - at least one base element configured to be attached to part of a roof, comprising a top surface which is facing away from the roof when mounted; and
   - at least one bracket configured for mounting at least part of at least one solar panel system,

   wherein the base element and the bracket comprise complementary coupling elements for mutual coupling; and
   wherein the base element is provided with at least one visual indicator for indicating allowable position of the base element for correct mounting of the device onto a roof, in particular onto the rafter of a roof.
33. Device according to any of the previous clauses, wherein the at least one visual indicator is positioned at a leading edge of the base element.
34. Device according to any of the previous clauses, wherein the at least one visual indicator is a polygonal shaped cut-out, in particular a triangular shaped cut-out.
35. Device according to any of the previous clauses, wherein at least one visual indicator comprises an image that is applied onto the top surface of the base element, such as an arrow-shaped image.
36. Device according to any of the previous clauses, wherein at least one visual indicator is palpable by a user's fingertips.
37. Bracket for use on a device according to any of the previous clauses.
38. System comprising multiple devices according to any of clauses 1 to 36.

The invention will be further elucidated by means of non-limiting exemplary embodiments illustrated in the following figures, in which:
- figure 1a shows a first embodiment of a device according to the present invention installed on a roof and figure 1b shows a top view of a first embodiment mounted on a part of a roof and figure 1c shows a detailed top view of the base element as shown in figure 1b;
- figure 2 shows a side view of a first embodiment of a device according to the present invention;
- figure 3 shows a perspective view of a first embodiment of a device according to the present invention;
- figure 4 shows a detailed view of part of an embodiment of a bracket according to the present invention;
- figure 5 shows a perspective view of a bracket of a second embodiment according to the present invention and wherein
- figures 6a, 6b and 6c show different steps in assembling a bracket and a base element according to a second embodiment of the invention;
- figure 7 shows a third embodiment of a device according to the present invention;
- figures 8a-e show different embodiments of the visual indicator as already shown in figure 1c.

Within these figures, similar reference numbers correspond to similar or equivalent elements or features.

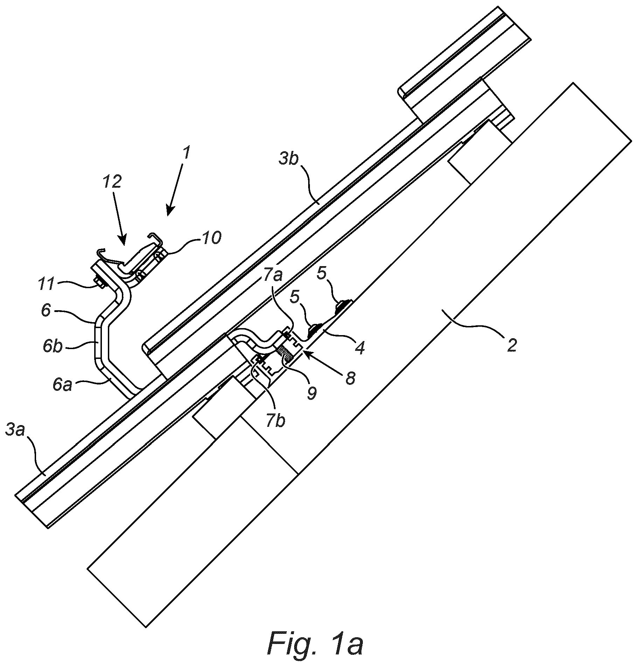

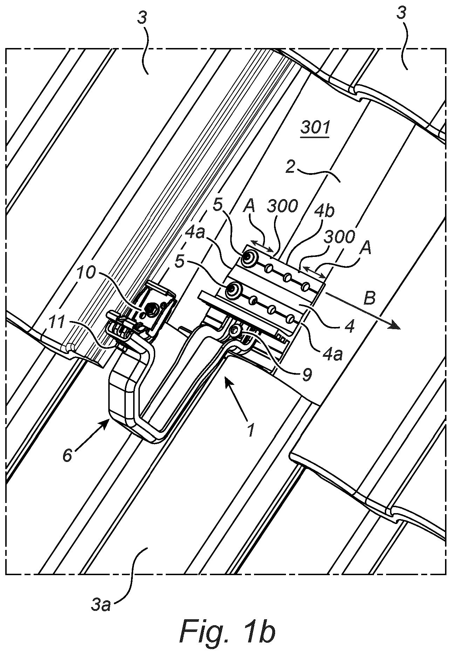

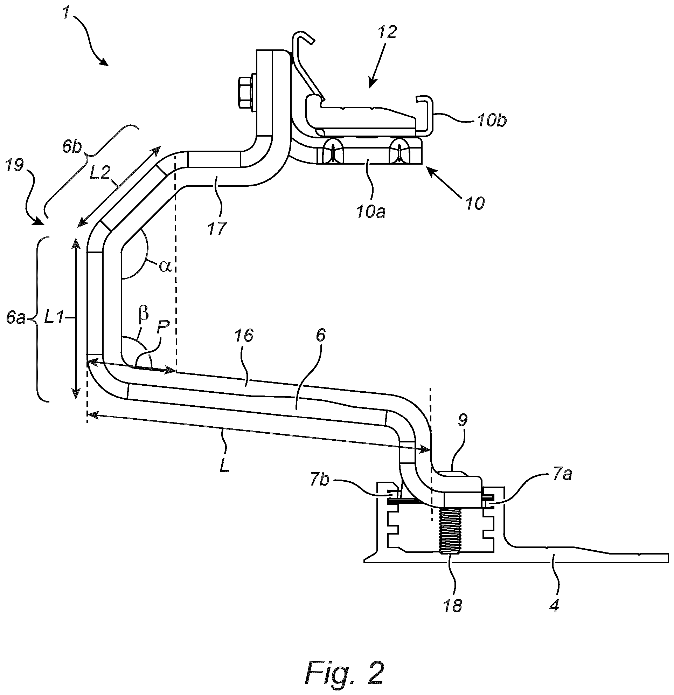

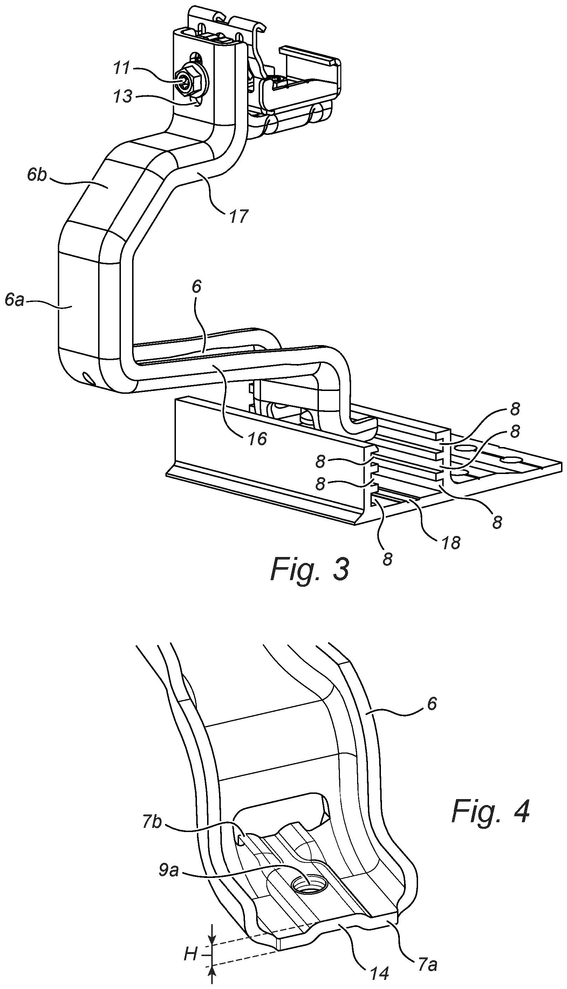

Figure 1a shows a device 1 according to the present invention mounted on a roof 2 comprising roof tiles 3, wherein the device 1 is positioned in between a lower tile 3a and a top tile 3b. Figure 1b shows a top view of the same construction as shown in figure 1a, wherein the top tile 3b is missing to provide a better view. The top tile 3b can be placed over the bracket 6. Optionally a small part of a top tile 3b can be adjusted in order to fit over the bracket 6. The embodiment of the device 1 is shown in further detail in figures 2 and 3. The device 1 comprises a base element 4 that is mounted onto the roof 2 by screws 5. The base element 4 comprises screw holes for allowing the screws 5 to attach the base element 4 to the roof 2. The device 1 further comprises a bracket 6, comprising a stem 6a and a branch 6b. The stem 6a positioned closer to the base element 4 than the branch 6b. The middle part of the bracket 6 comprises a distance element that is formed by a stem 6a and a branch 6b. The lower part of the bracket 6 is configured for coupling with the base element 4. The upper part of the bracket 6 is configured for coupling with the top structure 10. The bracket 6 is positioned over the lower roof tile 3a. and partly under roof tile 3b. The bracket 6 is coupled to the base element 4 by coupling elements 7a, 7b. The coupling elements 7a and 7b extend in opposite directions from the bracket 6 and can slide within grooves 8 that are present within the base element 4. A support screw 9 can prevent sliding when assembled. The base element 4 comprises several grooves 8 that are positioned at different height levels. In the figure shown the bracket 6 is positioned in the top groove 8. The grooves 8 can be used for adjusting the bracket at three different heights with respect to the roof 2. The grooves 8 can also be used for horizontal alignment of the bracket 6, because the coupling elements 7a, 7b can slide within the grooves 8. The bracket 6 is further connected to the base element by a support screw 9.

The bracket 6 is further coupled to a top structure 10. The top structure 10 and the bracket 6 are movable in height with respect to each other. The top structure and the bracket are coupled by the screw 11. The top structure 10 is configured for receiving a rail for mounting of a solar panel (not shown) in the receiving space 12.

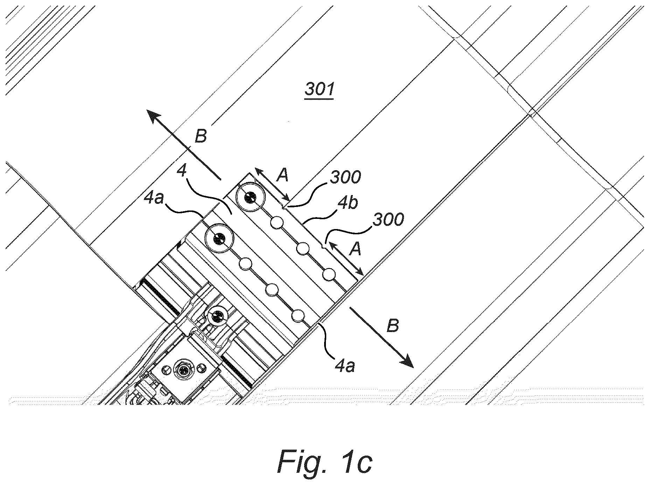

In figure 1b at the edge of the base element 4 two visual indicators 300 are provided at the leading edge 4b of the base element. In the shown embodiment these visual indicators 300 are shaped as triangular cut-outs. The visual indicators 300 may also have any other shape cut-out and/or be applied as a visual indicator such as a protrusion and/or a lining that is visible at the top surface of the base element 4. The visual indicators 300 are positioned such that the distance from the visual indicator 300 to the side edge 4a of the base element 4 indicates the minimum amount of overlap of the base element with the rafter 301. The mechanic can shift the base element 4 in the direction of arrow B, or the opposite direction, in order to place the base element on the rafter 301. As long as at least one of the visual indicators 300 is positioned on the rafter 301 the position of the base element is allowable. If this is followed, the base element 4 is in direct contact with the rafter over at least the distance A. The distance between the visual indicators is larger than the distance A between the visual indicator and the distance between the visual indicator 300 and the side edge 4a of the base element 4. The triangular cut-out embodiment of the visual indicator 300 is shown in further detail in figure 1c. Similar reference numbers are used.

Figure 2 shows a side view of a first embodiment of a device according to the present invention. Figure 3 shows a perspective view of the same embodiment. The device 1 shown comprises a base element 4, bracket 6 and a top structure 10. The bracket 6 is made from sheet metal. The sheet metal is bent at the sides of the bracket forming a continuous channel-shaped elongated structure for the bracket 6. The cross-section of the bracket in the middle part is substantially [-shaped. This can be referred to as deviating C-shaped and/or U-shape. The base element 4 is made from extruded aluminum. The bracket 6 comprises an upper bracket part 17 and a lower bracket part 16 which connected via an angled distance element 19. The angled distance element 19 is defined by at least one stem 6a and at least one branch 6b. The length of the at least one stem 6a is larger than the length of the at least one branch 6b. And the length of a projection P of the at least one branch 6b upon, or extending over, the lower bracket part 16 of the bracket 6 is in the range of ¼ to ½ of the length L of the lower bracket part 16. Further, in the shown embodiment, the smallest distance between the upper bracket part 17 and the lower bracket part 16 is substantially the same or larger than the distance between the at least one stem 6a and the distal end of the upper bracket part 17.

The bracket 6 comprises a distance element defined by a stem 6a and a branch 6b which stem 6a has a length L1 longer than the length L2 of the branch 6b. The bracket 6 further comprises two diverging bracket parts, a first bracket part 16 and a second bracket part 17. The distance element is positioned in between the diverging parts 16, 17. The branch 6b and the stem 6a enclose a mutual angle alpha (α). This angle is 135 degrees in the shown embodiment, providing strength to the bracket while being lightweight. The stem 6a encloses a mutual angle beta (β) with the first bracket part 16. In the shown embodiment the angle beta is 96 degrees.

The mounting of the solar panel in the shown embodiment is done by placing the rail for mounting the solar panel within the receiving space 12. The height of the solar panel with respect to the roof can be adjusted in two ways. The first is that the distance to the roof can be adjusted in height by adjusting the height of the top structure 10 to the bracket 6 by the screw 11 and the slit 13 that is present in the upper part of the bracket 6. Further, the height of the solar panel with respect to the roof can be adjusted by positioning the lower part of the bracket 6 in the desired groove 8 in the base element. The bracket 6 comprises coupling elements 7a, 7b that are configured to slide within the grooves 8 of the base element 4. The base element 4 comprises grooves 8 that are spaced apart and form three different height levels for positioning of the bracket 6 within the base element 4. The lower part of the bracket 6 comprises a front coupling element 7a and a back coupling element 7b. The coupling elements 7a, 7b extend in opposite directions. In the shown embodiment, the coupling elements 7a, 7b extend directly from the same aligned portion of the bracket without intermediary arms, legs or portions. The coupling elements 7a, 7b couple with the base element by their shape. The bracket 6 is further coupled to the base element 4 by a support screw 9. The support screw 9 can cooperate with the threaded through hole 9a in the lower part of the bracket 6. The threaded through hole 9a is positioned centrally in the indent 14. The indent 14 can also be referred to as a raised middle portion. The screw 9 can be screwed into, but not through, the base element in the screw recess 18 said recess 18 located laterally along the base and parallel to the grooves 8. A detailed view of this lower part of the bracket is shown in figure 4.

Figure 4 shows a detailed view of part of an embodiment of a bracket 6 according to the present invention. The figure shows a detailed view of a lower part of the bracket 6 according to an embodiment of the present invention. This can for example be used in the first embodiment as shown in the previous figures. The shown embodiment is made from sheet metal. The lower part of the bracket 6 comprises an indent 14 for increased strength. The indent 14 is a raised middle portion. The front coupling element 7a is integrated within the indent. The combined height H of the raised middle portion and the lower side flanks can correspond with the height of the grooves 8 of the base element 4. The back coupling element 7b comprises raised side portions which similarly create a combined height with the central portion that corresponds with the grooves 8. Coupling elements 7a, 7b extend from opposite sides of the same lower portion of the bracket 6 and project beyond the adjacent side areas. Couplings elements 7a, 7b are sized and configured to extend into and slideably cooperate with the grooves 8. Coupling elements 7a, 7b extend from opposite sides of the same lower portion of the bracket 6 and project beyond the adjacent side areas. Couplings elements 7a, 7b are sized and configured to extend into and slideably cooperate with the grooves 8. The indent 14 defines a raised portion flanked by two lower portions of the front coupling element 7a. The raised portion 14 of the coupling element 7a extends across the lower bracket portion and defines the central portion of the protruding coupling element 7b on the opposite side of the bracket lower portion. This central portion of coupling element 7b is flanked by two upwardly indented portions. The relationship between the central and flanking elements defines the relative heights of the coupling elements 7a, 7b, wherein the individual heights H of the coupling elements 7a, 7b may be the same and the distance above the base or roof when installed may be different and specifically protruding coupling element 7b may be higher or further above the base than the protruding coupling element 7a.

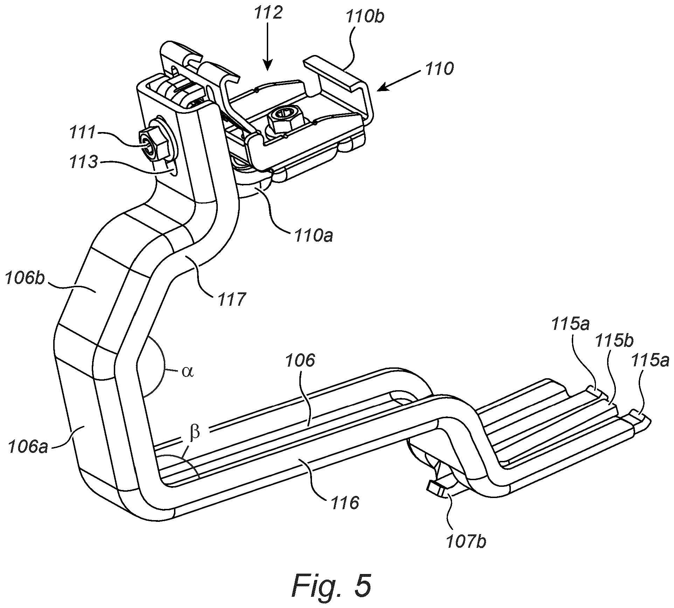

Figure 5 shows a bracket 106 and a top structure 110 second embodiment of a device 100 according to the present invention. The bracket 106 comprises a stem 106a and a branch 106b. The branch 106b and the stem 106a enclose a mutual angle of substantially 135 degrees in the shown embodiment. The bracket 106 is made from sheet metal. The shown bracket 106 comprises three fingers, two side fingers 115a and one middle finger 115b in the lower part of the bracket. The middle finger 115b is resilient and shorter than the two side fingers 115a. The middle finger 115b forms an angle with the two side fingers 115a. Once assembled, the side fingers 115a are parallel with the base plate 104a of the base element 104. In the base plate 104a through holes 105a are present for mounting screws and coupling the base element 104 to a roof.

A solar panel can be received and coupled to the top structure 110. The upper part of the bracket 106 is coupled with a top structure 110. The top structure comprises a support element 110a and a clicker system 110b forming a receiving space 112 for receiving a rail for mounting a solar panel. The bracket 106 comprises a distance element that is formed by a stem 106a and a branch 106b. The bracket 106 further comprises a two substantially parallel bracket parts. A first bracket part 116 and a second bracket part1 17. The branch 106b and the stem 106a enclose a mutual angle alpha (α). This angle is 135 degrees in the shown embodiment, providing strength to the bracket while being lightweight. The stem 6a encloses a mutual angle beta (β) with the bracket part 16. In the shown embodiment the angle beta is 96 degrees.

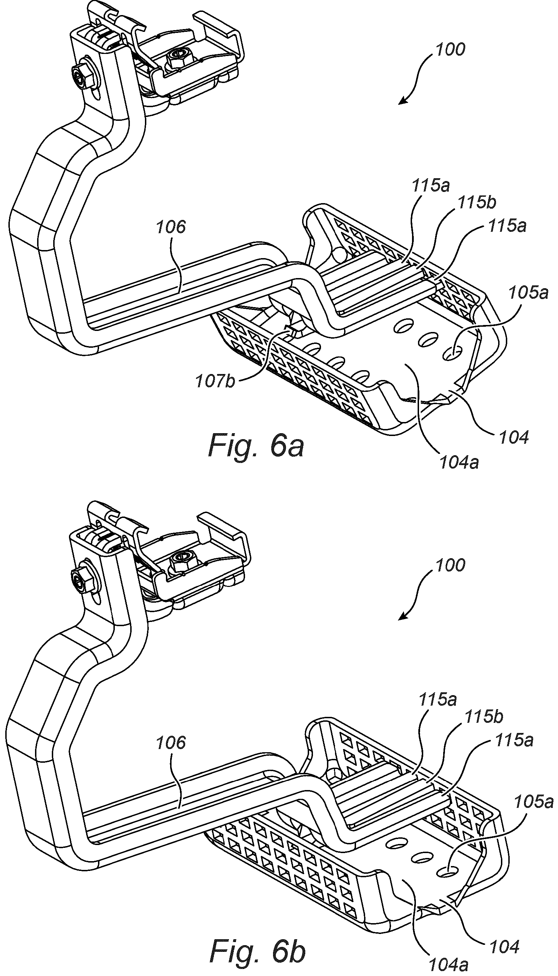

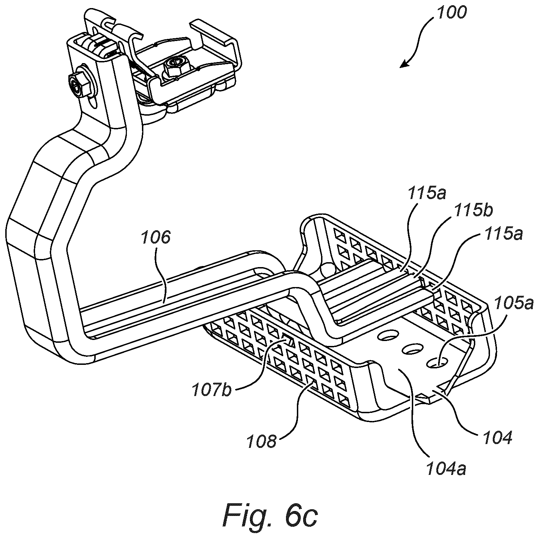

Figures 6a, 6b and 6c show different steps in assembling the device 100 with a bracket 106 and base element 104. The device 100 comprises a bracket 106, a top structure 110 and a base element 104. The height of a solar panel to be installed with respect to a roof can be adjusted in two ways. One option for adjusting the height is by adjusting the height of the top structure 110 with respect to the bracket 106. This can be done by coupling the top structure to the bracket by the screw 111 in the slit 113 in the upper part of the bracket 106 at the desired position. A second option for adjusting height, is to position the fingers 115a, 115b and the coupling element 107 in the desired vertical position in the base element 104. The base element 104 comprises a matrix of through holes 108 that can be used for positioning of the bracket 106 at the desired horizontal position, by choosing the through holes in a desired column. And furthermore, the matrix of through holes 108 in the base element 104 can be used to position the bracket 106 at the desired vertical position by positioning the fingers 115a, 115b and the coupling element 107 in the desired row of the matrix with through holes 108.

Figures 6a-6c show the steps of assembling a bracket 106 to a base element 104. These steps can be performed after the base 104 is attached to a roof structure. Figure 6a shows the first step of assembling the bracket 106 and the base element 104. The lower fingers 115a are aligned with the holes on the desired vertical level, the side fingers are positioned at the desired row of the matrix of holes 108 and the lower fingers 115a are aligned laterally with the holes on the desired column of the matrix of holes 108. In this way the bracket 106 is positioned properly in relation to the tile 3a and the roof 2. In figure 6a the second step is shown, wherein the middle finger 115b is pressed down and inserted into the through hole in the same row as the side fingers 115a, allowing the fingers to extend further into the holes 108. A further step is shown in figure 6c, wherein the bracket is moved in the opposite direction for coupling the coupling element 107b with a through hole 108 on the opposite side of the base element 104. The coupling element 107b comprises an upward distal end. The upward distal end can act as a hook for hooking in a through hole of the base element 104. The middle finger 115b is shorter and thus will spring upwards in the shown embodiment, thereby locking the bracket in between the sides of the base element 104.

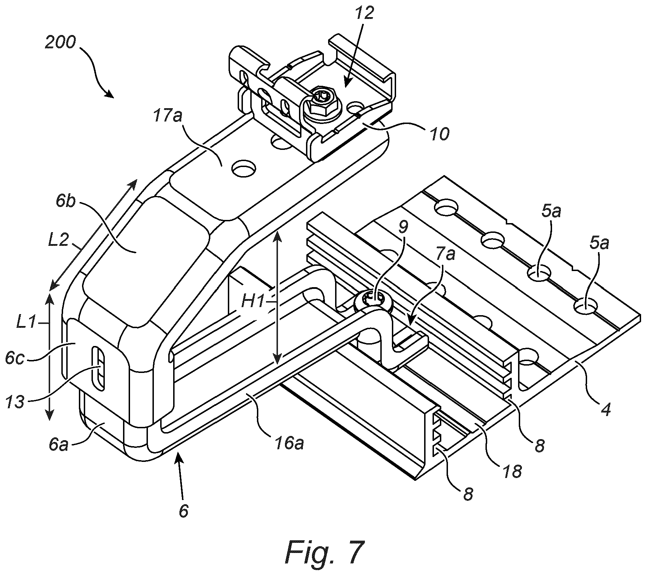

Figure 7 shows a third embodiment of a system 200 according to the present invention. Similar reference numbers are used to indicate similar features as shown in the first embodiment. The height H1 of the distance element formed by the stem 6a and the branch 6b is adjustable. The system comprises a base element 4, comprising multiple grooves 8. The bracket 6 can be positioned at the desired vertical and horizontal position within the grooves 8. The bracket 6a comprises coupling elements 7a, 7b (not shown). The bracket 6a is further fixed in position to the base element by a support screw 9 and the receiving space 18. The receiving space 18 is formed by two raised portions along the base of the base element 4. The base element 4 can be coupled to a roof by screws through the through holes 5a. The bracket 6 is coupled to a top structure 10 that comprises a receiving space 12 for receiving a rail for mounting a solar panel. The height of the solar panel with respect to the roof is adjustable by adjusting the vertical position in the base element 4 as described. Furthermore, in this embodiment it is possible that the height of the distance element is adjustable. The stem 6a can be extended by a screw (not shown) in a slit 13. Depending on the relative position of branch 6b, upper stem 6c and the lower stem 6a, the height H1 of the distance element can be adjusted. The length L1 of the stem 6a is also adjustable by the same mechanism. In either configuration, the length L1 of the stem 6a is longer than the length L2 of the branch 6b of the distance element of the bracket 6. This adjustment mechanism in the distance element partly determines the distance of the installed solar panel to the roof. The bracket parts, first bracket part 16a and second bracket part 17a are substantially parallel in the shown embodiment.

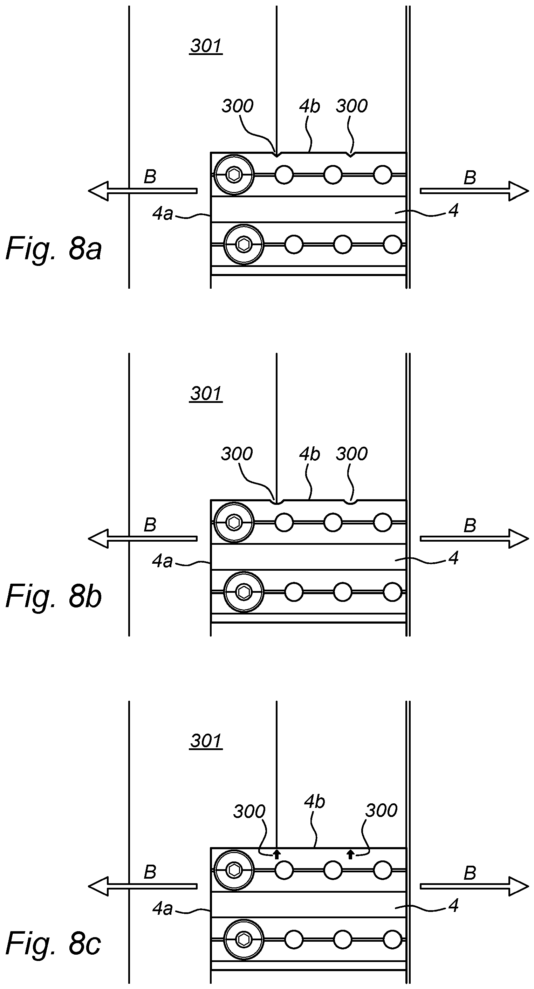

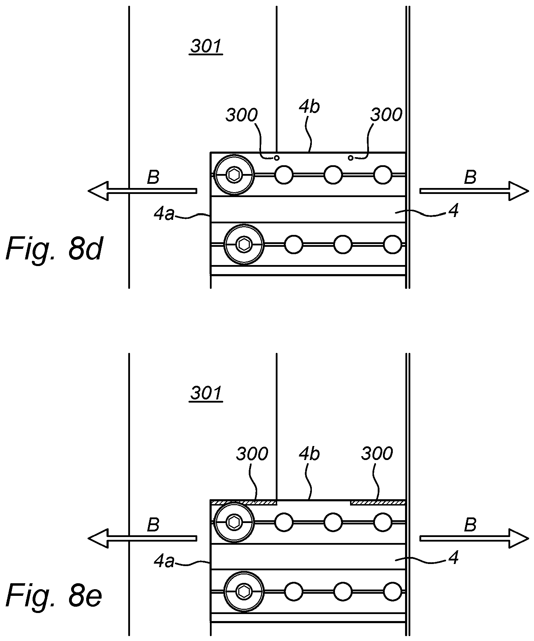

Figures 8a-e show different embodiments of the visual indicator as already shown in figure 1c. In all figures the base element 4 is positioned at the same allowable position on the rafter 301. The allowable position of the base element 4 onto the rafter is indicated by the visual indicator 300. The base element can be shifted along the direction of arrow B, as long as the visual indicator 300 is on or at the side edge of the rafter 301. In figure 8a the visual indicator 300 comprises a triangular cut-out, as also shown in figure 1c. In figure 8b the visual indicator is a curved indent at the leading edge 4b of the base element 4. Figure 8c shows an embodiment of the visual indicator 300, wherein the visual indicator is applied onto the top surface of the base element 4. The visual indicator 300 comprises an arrow-shaped image that indicates the allowable position of the base element 4 onto the rafter 301 for correct mounting. Another embodiment is shown in figure 8d, wherein the visual indicator 300 comprises a through hole. The side of the rafter 301 can be seen through the through hole. This allows the user to find the allowable position. Figure 8e shows another embodiment of the visual indicator 300, wherein the visual indicator is applied along the leading edge. The visual indicator 300 as shown in figure 8e indicates which part of the base element should be positioned onto the rafter 301. The visual indicator 300 as shown in figure 8e can be formed for example by a pattern comprising small protrusions or indents. The embodiment shown uses small ridges to create a ribbed surface as a visual indicator 300. Several embodiments of the visual indicators 300 as shown in figures 8a-8e can also be combined.

It will be clear that the invention is not limited to the exemplary embodiments which are illustrated and described here, but that countless variants are possible within the framework of the attached claims, which will be obvious to the person skilled in the art. In this case, it is conceivable for different inventive concepts and/or technical measures of the above-described variant embodiments to be completely or partly combined without departing from the inventive idea described in the attached claims.

The verb 'comprise' and its conjugations as used in this patent document are understood to mean not only 'comprise', but to also include the expressions 'contain', 'substantially contain', 'formed by' and conjugations thereof.

## Claims

1. Device for mounting at least one solar panel to a roof, comprising:
- at least one base element configured to be attached to part of a roof; and
- at least one bracket configured for mounting at least part of at least one solar panel system,
wherein the base element and the bracket comprise complementary coupling elements for mutual coupling; and
wherein at least part of the bracket defines an angled configuration, said bracket comprising an upper bracket part and a lower bracket part, which bracket parts are substantially parallel and/or substantially diverging and which are connected via at least one angled distance element, wherein at least one angled distance element is defined by at least one stem and at least one branch wherein the length of the at least one stem is larger than the length of the at least one branch, and
wherein the length of a projection of the at least one branch extending over the lower bracket part of the bracket is in the range of ¼ to ½ of the length of the lower bracket part.

2. Device according to claim 1, wherein the smallest distance between the upper bracket part and the lower bracket part is substantially the same or larger than the distance between the at least one stem and the distal end of the upper bracket part.

3. Device according to any of the previous claims, wherein the at least two substantially parallel and/or diverging upper and lower bracket parts and the angled distance element are made of a single piece.

4. Device according to any of the previous claims, wherein the lower bracket part is substantially elongated and wherein a distal end of said bracket part comprises at least one coupling element for coupling to at least one base element.

5. Device according to any of the previous claims, wherein the length of the lower bracket part is larger than the length of the upper bracket part.

6. Device according to claim 5, wherein the length of the lower bracket part is at least 3 times the length of the upper bracket part.

7. Device according to any of the previous claims, wherein the lower bracket part and the distance element enclose an angle in the range of 80 to 110 degrees, preferably in the range of 90 to 100 degrees, more preferably substantially 95 degrees.

8. Device according to any of the previous claims, wherein the upper bracket part and the distance element enclose an angle larger than 90 degrees, preferably larger than 100 degrees, more preferably larger than 120 degrees.

9. Device according to any of the previous claims, wherein at least one distance element is an angled distance element, wherein the angled distance element defines an included angle larger than 100 degrees, preferably larger than 120 degrees, more preferably larger than 130 degrees.

10. Device according to any of the previous claim, wherein at least one bracket comprises at least one top structure configured for mounting at least part of at least one solar panel system, wherein at least one top structure is adjustably connected to the upper bracket part in particular in a rotatable manner.

11. Device according to any of the previous claims, wherein at least part of the bracket is made of metal, preferably sheet metal.

12. Device according to any of the previous claims, wherein at least one base element comprises at least one base plate configured to be attached to part of a roof and at least one coupling element configured for coupling with at least one bracket.

13. Device according to any of the previous claims, wherein at least one bracket comprises at least one reinforcement rib and/or at least one reinforcing side wall.

14. Device according to any of the previous claims, comprising at least one support screw attached or attachable to the bracket and the base element such that support is provided for the bracket with respect to the base element, wherein at least one base element comprises a recess and/or receiving space for receiving at least part of at least one support screw.

15. Device according to any of the previous claims, wherein at least one bracket comprises at least one coupling element comprising at least one protrusion and wherein at least one base element comprises at least one complementary coupling element comprising at least one receiving space for receiving at least part of at least one protrusion.
